(19) Europäisches Patentamt
European Patent Office
Office européen des brevets

(11) **EP 3 511 875 A1**

(12) **EUROPEAN PATENT APPLICATION**

(43) Date of publication:
**17.07.2019 Bulletin 2019/29**

(51) Int Cl.:
***G06Q 10/00*** *(2012.01)*      ***G06Q 10/06*** *(2012.01)*

(21) Application number: **18151727.7**

(22) Date of filing: **15.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **BAE SYSTEMS plc
London SW1Y 5AD (GB)**

(72) Inventor: **The designation of the inventor has not
yet been filed**

(74) Representative: **BAE SYSTEMS plc
Group IP Department
Farnborough Aerospace Centre
Farnborough
Hampshire GU14 6YU (GB)**

(54) **COMPUTER-IMPLEMENTED METHODS OF EVALUATING TASK NETWORKS**

(57)    A computer-implemented method of evaluating a task network. The task network comprises primitive tasks which represent actions, compound tasks which represent a plurality of tasks, goal tasks which represent desired goals, and one or more constraints associated with the tasks of the task network. A library of network fragments is provided, where each network fragment comprises a plurality of tasks and one or more associated constraints, and a plurality of network fragments of the library of network fragments have associated with them an abnormality level. One or more network fragments of the library of network fragments are matched with a plurality of tasks and one or more associated constraints of the task network. A normality score is determined for the task network using the abnormality levels associated with the one or more matching network fragments.

Fig. 2

**Description**

Field of the Invention

The present invention concerns computer-implemented methods of evaluating task networks. More particularly, the invention concerns evaluating a task network using a library of network fragments, to determine a normality score for the task network. The invention is particularly, but not exclusively, applicable to hierarchical task networks.

Background of the Invention

Hierarchical task networks (HTNs) are a well-established approach for automated planning used in artificial intelligence (AI), where dependencies between actions can be defined as a network. HTNs are also used outside of AI, both for planning and for analysing data relating to events that have occurred, particularly data obtained from multiple different sources, to determine if the data suggests that certain events are being planned. For planning, HTNs may be used to determine the individual steps required to perform a particular task. For analysis, HTNs may be used, for example, to identify from data relating to financial transactions, e-mail and telephone communications, travel information and other data that a complex financial fraud is being planned.

An HTN consists of a set of tasks and associated constraints. A task may be:

1. a primitive task, which corresponds to an action that can be executed (i.e. can or has occurred);
2. a compound task, which corresponds to a set of simpler tasks;
3. a goal task, which corresponds a desired outcome as defined by a set of conditions that must be satisfied.

The constraints of the HTN define requirements between the tasks; for example, a constraint may be that for a particular compound task to be executed, it is necessary that a particular primitive task to have been executed.

It is known to use a library of network fragments in order to transform an HTN, by matching the tasks and constraints in the network fragments with the tasks and constraints in the HTN. It is also known to score how well an HTN is matched by a network fragment. However, it would be advantageous to use libraries of network fragments to evaluate HTNs in more sophisticated ways, and the present invention seeks to provide improved methods of evaluating task networks.

Summary of the Invention

In accordance with a first aspect of the invention there is provided a computer-implemented method of evaluating a task network, wherein the task network comprises:

primitive tasks which represent actions;
compound tasks which represent a plurality of tasks;
goal tasks which represent desired goals;
one or more constraints associated with the tasks of the task network;
the method comprising the steps of:

providing a library of network fragments, wherein each network fragment comprises a plurality of tasks and one or more associated constraints, and wherein a plurality of network fragments of the library of network fragments have associated with them an abnormality level;
matching one or more network fragments of the library of network fragments with a plurality of tasks and one or more associated constraints of the task network; and
determining a normality score for the task network using the abnormality levels associated with the one or more matching network fragments.

In this way, network fragments can be provided in the library that are indicated as being abnormal by having an associated abnormality level. A network fragment may be indicated as being abnormal where its tasks correspond to events of a criminal activity, for example, though it will be appreciated that other types of occurrence could similarly be indicated as being abnormal. A normality score for the task network itself, in other words a measure of its abnormality, can then advantageously be determined using the abnormality levels of any network fragments with which it is matched.

Preferably, the task network is a hierarchical task network. However, it will be appreciated that the invention is also applicable to task networks that do not have all the features necessary to be considered a hierarchical task network.

Advantageously, the normality score for the task network is determined using the count of matching network fragments with an associated abnormality level. Thus, if the task network matches a number of abnormal network fragments, that can be taken as evidence that the task network itself is abnormal, and the normality score can reflect that. The abnormality level associated with a network fragment may be a simple Boolean value (i.e. abnormal or not), or the abnormality level may come from a scale of different abnormality values.

Alternatively and/or additionally, the normality score for the task network is advantageously determined using the number of matching network fragments with an associated abnormality level that comprise a particular task of the task network. Thus, if a particular task of the task network is present in multiple abnormal network fragments, that can be taken as evidence that the particular task is itself likely to be abnormal, and so the normality score can reflect this. This is in contrast to the situation where while tasks of the task network are present in many abnormal network fragments, it is different tasks of the task network that are present in different abnormal network fragments. In this case, the tasks are more likely to be present in the abnormal network fragments only by coincidence, and not because they are themselves abnormal tasks.

Each of the one or more matching network fragments may have associated with it a match value indicative of the extent the network fragment matches the task network. In this case, advantageously the normality score for the task network is determined using the match values of the one or more network fragments. Thus, the effect a matched network fragment has on the normality score can depend upon how well the network fragment matches the task network.

One or more tasks of the plurality of network fragments of the library of network fragments with an associated abnormality level may have associated with them a task abnormality level. In this case, advantageously the normality score for the task network is determined using the task abnormality levels of the tasks of the task network that match tasks of the one or more matching network fragments.

In accordance with a second aspect of the invention there is provided a computing device comprising:

    a processor;
    memory;
    wherein there is stored on the memory a library of network fragments, and wherein the computing device is arranged to perform, using the processor, any of the methods described above.

In accordance with a third aspect of the invention there is provided a computer program product arranged, when executed on a computing device, to perform any of the methods described above.

In accordance with a fourth aspect of the invention there is provided a computer program product arranged, when executed on a computing device, to provide the computing device described above.

It will of course be appreciated that features described in relation to one aspect of the present invention may be incorporated into other aspects of the present invention. For example, the method of the invention may incorporate any of the features described with reference to the apparatus of the invention and *vice versa.*

## Description of the Drawings

Embodiments of the present invention will now be described by way of example only with reference to the accompanying schematic drawings of which:

Figure 1    is a schematic diagram of a computer system comprising a computer device in accordance with a first embodiment of the invention;

Figure 2    shows an example hierarchical task network;

Figure 3    shows an example library of network fragments;

Figure 4    is a flowchart showing the use of the computer device of Figure 1 to evaluate the hierarchical task network of Figure 2 using the library of network fragments of Figure 3, in accordance with an embodiment of the invention;

Figure 5    is a flowchart showing the use of the computer device of Figure 1 in accordance with another embodiment of the invention; and

Figure 6    is a flowchart showing the use of the computer device of Figure in accordance with yet another embodiment of the invention.

## Detailed Description

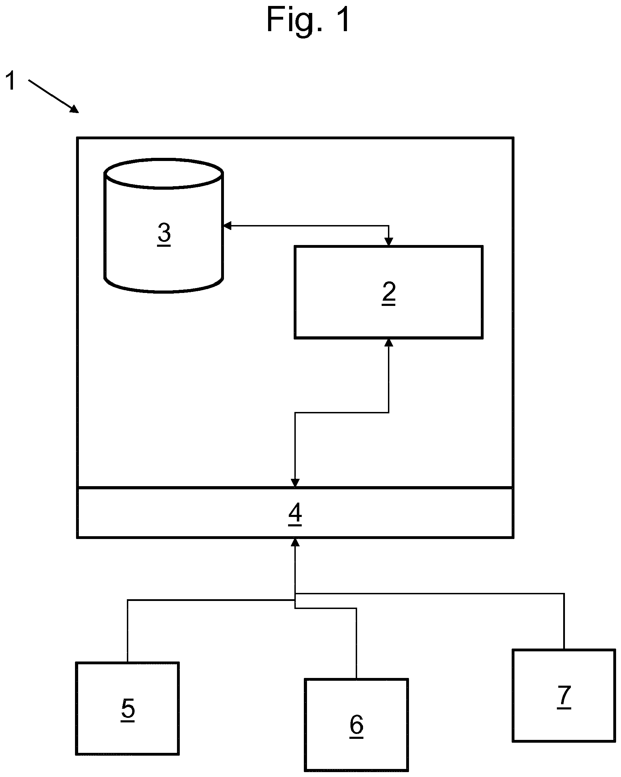

A method of evaluating an HTN in accordance with a first embodiment of the invention is now described with reference to Figures 1 to 4. The method is performed on a computing device 1 as shown in Figure 1, which may be a personal computer, server or the like. The computing device 1 comprises a processor 2, which may in practice comprise multiple separate processor "cores". The processor 2 in communication with memory 3 and a network interface 4. The computing device 1 is able to communicate via the network interface 4 with remote devices 5, 6, 7, which are other computer devices/systems which provide data to the computing device 1. The remote devices 5, 6, 7 may be communicated with via a local area network, the Internet or the like.

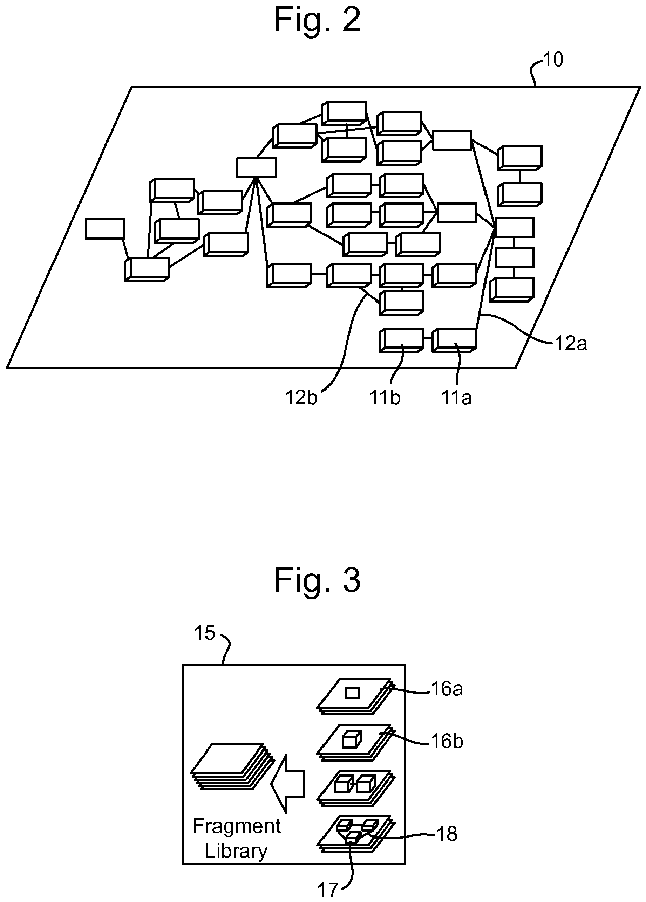

Figure 2 is shows an example HTN. The HTN 10 comprises a plurality of tasks 11a, 11b. As can be seen, certain of the tasks are linked by constraints 12a, 12b. The HTN 10 is received from the remote device 5 and stored in the memory 3 of the computing device 1, though it will be appreciated that this is only an example and the HTN 10 could be received and/or generated and stored in various different ways in accordance with embodiments of the invention.

Figure 3 shows an example library of network fragments. The library 15 is received from the remote device 6 and stored in the memory 3 of the computing device 1. Again, it will be appreciated that this is only an example and the library 15 could be received and/or generated and stored in various different ways in accordance with embodiments of the invention. The library 15 comprises a plurality of network fragments 16a, 16b. Some of the network fragments of the library 15 will have associated with them an abnormality level, as discussed in more detail below.

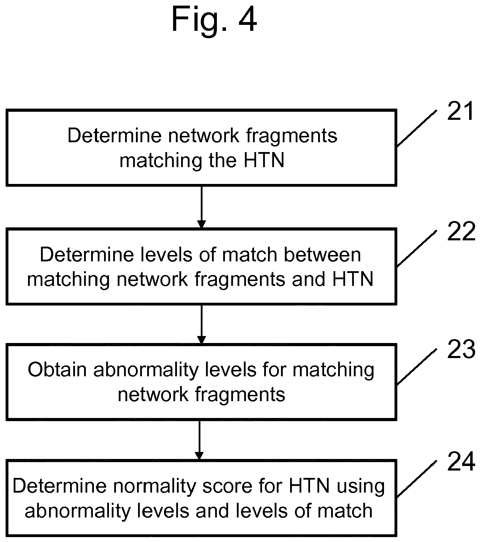

The method of the present embodiment, as performed by the computing device 1, is now described with reference to Figure 4. A request for the normality score for the HTN 10 is received via the remote device 7. It will be appreciated that the request may be made along with a copy of the HTN 10 itself, and a copy of the library 15 may also be provided, or may already be present in the memory 3. (So for example the computing device 1 may provide a service that determined a normality score for a provided HTN, using a library of network fragments that it already has upon it as part of the service provided.)

In a first step, one or more network fragments of the library 15 of network fragments are matched with the HTN (step 21). In other words, tasks and associated constraints of the network fragments in the library 15 are matched with tasks and associated constraints of the HTN 10. This may be done using any suitable method, of which various will be well known to the skilled person. In the present example, it is supposed that the HTN 10 matches with network fragments A, B, C, D and E.

Next, for each matching network fragment a level of match between the network fragment and the HTN 10 is determined (step 22). Again, this may be done using any suitable method, of which various will be well known to the skilled person. In the present example, it is supposed that the level of match for network fragments A, B, C, D and E are 50%, 50%, 75%, 45% and 90% respectively.

Next, any abnormality levels associated with the matching network fragments are obtained (step 23). The abnormality levels may be as simple as a Boolean true/false (i.e. a network fragment is either considered to be abnormal or it is not), or there may be a scale of abnormality levels as percentage from 0% to 100%, to give just one of many different possibilities. In the present example, it is supposed that the abnormality levels are a simple a Boolean true/false, and network fragments A, C and D are considered abnormal (abnormality level "true") while network fragments B and E are not (abnormality level "false").

The normality score for the HTN 10 is then determined using the match levels and abnormality levels (step 24). In particular, the normality score for the HTN 10 is determined to be the average of the abnormality levels of the matching network fragments (taking "true" as 100% and "false" as 0%) multiplied by the match levels. So this gives a normality level N for HTN 10 of:

$$N = ((100\% . 50\%) + (0\% . 50\%) + (100\% . 75\%) + (100\% . 45\%) + (0\% . 90\%)) / 5$$

$$= (50\% + 75\% + 45\%) / 5 = (170\%) / 5 = 34\%$$

However, it will be appreciated that in other embodiments the match levels and abnormality levels may be used to determine the normality score for the HTN 10 in various different ways. For example, instead of taking the average of the abnormality levels of the matching network fragments, some fragments may have greater influence than others on the overall score for HTN 10. Hence, the abnormality level of matching with some network fragments may increase the computed abnormality level more than others. To give just one example, matching a network fragment A that identifies extortion against specific victims may provide greater support for evidence of an organised criminal activity HTN 10, than another network fragment B that just shows a specific money transaction.

Once the normality score has been determined, it is provided as output back to the remote device 7.

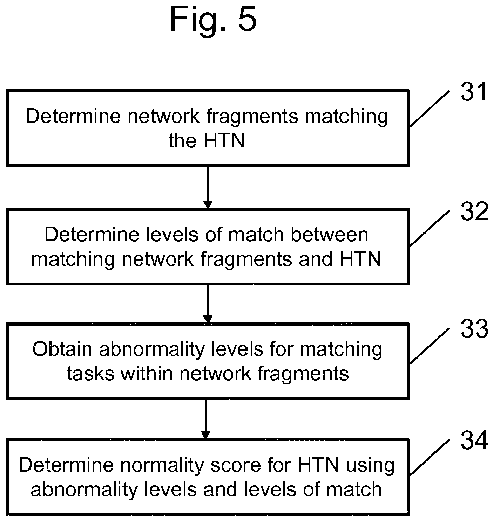

A method in accordance with another embodiment of the invention is now described with reference to Figure 5. In the present embodiment, the abnormality levels for the network fragments of the library 15 are defined at the level of the tasks of the network fragments. In other words, any task of a network fragment may have an abnormality level, and different tasks in the same network fragment may have different abnormality level (or no abnormality level at all). For example, a network fragment characterising a type of money laundering activity may include a task representing irregular transactions between two individuals at abnormality level 100% (true), and a task representing connections between the individuals involved in the transaction and a money laundering group at abnormality level 50% (only partial evidence that they belong to the same group). The abnormality level for the network fragment (money laundering activity) is then determined using the match levels and abnormality levels for the tasks within the fragment.

As in the previous embodiment, in a first step one or more network fragments of the library 15 are matched with the HTN (step 31). For each matching network fragment a level of match between the network fragment and the HTN 10 is then determined (step 32).

Next, any abnormality levels associated with the matching tasks of the matching network fragments are obtained (step 33). In other words, any matching network fragment will have matched because it shares some subset of tasks with the HTN 10, and the abnormality levels associated with those subsets of tasks are obtained. The normality score for the HTN 10 is then determined using the match levels and abnormality levels for the tasks (step 34). In the present embodiment, the normality score for the HTN 10 is determined to be the average of the abnormality levels of the matching tasks multiplied by the match levels. However, it will be again be appreciated that in other embodiments the match levels and abnormality levels may be used to determine the normality score for the HTN 10 in various different ways. For example, it may be desirable to not include tasks with low or no abnormality levels when determining the normality score for the HTN 10, so that the existence of such matched tasks does not reduce the normality score for the HTN 10. This is because the fact that there are non-abnormal tasks as well as abnormal tasks does not necessarily imply that the overall behaviour is less abnormal (as for example a criminal activity is likely to be made up of both normal and abnormal tasks). Indeed, it may be desirable to flag the existence of an abnormal task amongst tasks with low or no abnormality levels, as it may be suggestive of an attempt to conceal abnormal behaviour. For example, determined criminals will often hide fraudulent activities within normal activities in order to fall beneath an abnormality threshold, and use deception tasks (other normal activities) to focus attention away from the fraudulent activities.

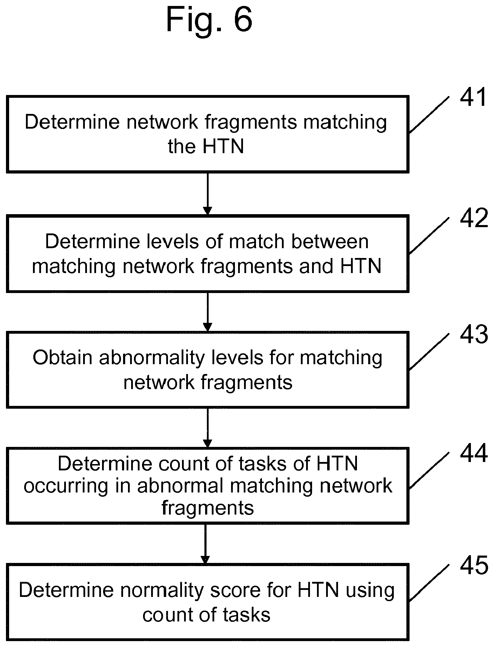

A method in accordance with another embodiment of the invention is now described with reference to Figure 6. In the present embodiment, as in the first embodiment the abnormality levels for the network fragments of the library 15 are defined at the level of the network fragments themselves, and the tasks they contain do not have their own abnormality levels.

As in the previous embodiments, in a first step one or more network fragments of the library 15 are matched with the HTN (step 41). For each matching network fragment a level of match between the network fragment and the HTN 10 is then determined (step 42). Any abnormality levels associated with the matching network fragments are then obtained (step 43).

A count of tasks of the HTN 10 that occur in abnormal matching network fragments is then determined (step 44). In other words, it is determined how many times a task of the HTN 10 occurs in an abnormal task network, as if a task occurs in many abnormal matching network fragments then it is likely to be a tasks that is itself inherently associated with abnormal behaviour. In contrast, if tasks do not occur in many abnormal matching network fragments, they are less likely to be inherently associated with abnormal behaviour. Thus, it may be that two HTNs both have the same abnormal matching network fragments. If the first HTN has specific tasks that occur in multiple abnormal matching network fragments, this suggests that the specific tasks are themselves associated with abnormal behaviour, and so the first HTN is itself more likely to be abnormal. For example, money laundering activities may involve the establishment of new overseas bank accounts for illicit funds to be transferred into, often from newly formed organisations/entities. Where these accounts are used regularly for normal business purposes, the abnormality level is likely to be low. However, indicators for money laundering may include tasks where large or multiple small sequential transaction occur infrequently or within a short time period. These may be included in several money laundering network fragments, thus increasing the count across matching fragments and the resulting abnormality level.

However, if in contrast the second HTN has tasks that occur in multiple abnormal matching network fragments (as it must), but for each abnormal matching network fragments it is different tasks of the second HTN that occur, this does not suggest that any specific tasks of the second HTN are associated with abnormal behaviour, so it is not the case that the second HTN is likely to be abnormal, despite it having the same abnormal matching network fragments as the first HTN. Thus, it will be seen that the normality score can be determined (step 45) using the count of tasks of the HTN 10 that occur in abnormal matching network fragments.

It will be appreciated that particularly if a task occurs in many non-abnormal matching network fragments as well as abnormal matching network fragments, this suggests that the task itself can be associated with both normal and abnormal behaviour, and so its existence in the HTN 10 is not good evidence that the HTN 10 is itself abnormal. Thus, the proportion of abnormal network fragments versus non-abnormal network fragments in which a task of the HTN 10 occurs may be used when determining the normality score for the HTN 10.

While the present invention has been described and illustrated with reference to particular embodiments, it will be appreciated by those of ordinary skill in the art that the invention lends itself to many different variations not specifically illustrated herein. In particular, it will be appreciated that the above embodiments may be combined in order to refine the determination of the normality score. It will also be appreciated that many other methods and techniques, including numerical, statistical and other types of method, will be available to the skilled person for determining the normality score in accordance with the invention.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Claims**

1.  A computer-implemented method of evaluating a task network, wherein the task network comprises:

    primitive tasks which represent actions;
    compound tasks which represent a plurality of tasks;
    goal tasks which represent desired goals;
    one or more constraints associated with the tasks of the task network;

    the method comprising the steps of:

    providing a library of network fragments, wherein each network fragment comprises a plurality of tasks and one or more associated constraints, and wherein a plurality of network fragments of the library of network fragments have associated with them an abnormality level;
    matching one or more network fragments of the library of network fragments with a plurality of tasks and one or more associated constraints of the task network; and
    determining a normality score for the task network using the abnormality levels associated with the one or more matching network fragments.

2.  A computer-implemented method as claimed in claim 1, wherein the task network is a hierarchical task network.

3.  A computer-implemented method as claimed in claim 1 or 2, wherein the normality score for the task network is determined using the count of matching network fragments with an associated abnormality level.

4.  A computer-implemented method as claimed any preceding claim, wherein the normality score for the task network is determined using the number of matching network fragments with an associated abnormality level that comprise a particular task of the task network.

5.  A computer-implemented method as claimed in claim any preceding claim, wherein each of the one or more matching network fragments has associated with it a match value indicative of the extent the network fragment matches the task network.

6.  A computer-implemented method as claimed in claim 5, wherein the normality score for the task network is determined using the match values of the one or more network fragments.

7.  A computer-implemented method as claimed in any preceding claim, wherein one or more tasks of the plurality of network fragments of the library of network fragments with an associated abnormality level have associated with them a task abnormality level.

8.  A computer-implemented method as claimed in claim 7, wherein the normality score for the task network is determined using the task abnormality levels of the tasks of the task network that match tasks of the one or more matching network fragments.

9.  A computing device comprising:

    a processor;
    memory;

    wherein there is library on the memory a library of network fragments, and wherein the computing device is arranged to perform, using the processor, the method of any of claims 1 to 8.

10. A computer program product arranged, when executed on a computing device, to perform the method of any of claims 1 to 8.

11. A computer program product arranged, when executed on a computing device, to provide the computing device of claim 9.

# Fig. 1

# Fig. 2

# Fig. 3

# Fig. 4

```
┌─────────────────────────────────┐
│   Determine network fragments   │ ╱ 21
│        matching the HTN         │
└─────────────────────────────────┘
                 │
                 ▼
┌─────────────────────────────────┐
│  Determine levels of match between │ ╱ 22
│ matching network fragments and HTN │
└─────────────────────────────────┘
                 │
                 ▼
┌─────────────────────────────────┐
│ Obtain abnormality levels for matching │ ╱ 23
│        network fragments        │
└─────────────────────────────────┘
                 │
                 ▼
┌─────────────────────────────────┐
│ Determine normality score for HTN using │ ╱ 24
│  abnormality levels and levels of match  │
└─────────────────────────────────┘
```

# Fig. 5

Determine network fragments matching the HTN — 31

Determine levels of match between matching network fragments and HTN — 32

Obtain abnormality levels for matching tasks within network fragments — 33

Determine normality score for HTN using abnormality levels and levels of match — 34

# Fig. 6

Determine network fragments matching the HTN — 41

Determine levels of match between matching network fragments and HTN — 42

Obtain abnormality levels for matching network fragments — 43

Determine count of tasks of HTN occurring in abnormal matching network fragments — 44

Determine normality score for HTN using count of tasks — 45

Europäisches
Patentamt

European
Patent Office

Office européen
des brevets

# EUROPEAN SEARCH REPORT

Application Number

EP 18 15 1727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 458 090 B1 (BATRA VISHAL S [IN] ET AL) 4 June 2013 (2013-06-04)<br>* column 2 - column 3; figure 1 *<br>* abstract *<br>* column 5 - column 6 *<br>----- | 1-11 | INV.<br>G06Q10/00<br>G06Q10/06 |
| X | US 2016/132886 A1 (BURKE ANDREW [CA] ET AL) 12 May 2016 (2016-05-12)<br>* abstract *<br>* paragraph [0025] - paragraph [0032]; figure 1 *<br>* paragraph [0068] - paragraph [0071] *<br>----- | 1-11 | |
| X | EP 3 038 046 A1 (PALANTIR TECHNOLOGIES INC [US]) 29 June 2016 (2016-06-29)<br>* paragraph [0014] - paragraph [0016]; figures 1,12 *<br>* paragraph [0039] - paragraph [0070] *<br>* paragraph [0087] - paragraph [0092] *<br>----- | 1-11 | |

TECHNICAL FIELDS
SEARCHED (IPC)

G06Q

The present search report has been drawn up for all claims

| Place of search | Date of completion of the search | Examiner |
|---|---|---|
| Munich | 20 June 2018 | Anastasov, Yuliyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 18 15 1727

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2018

| Patent document cited in search report | | Publication date | Patent family member(s) | | Publication date |
|---|---|---|---|---|---|
| US 8458090 | B1 | 04-06-2013 | NONE | | |
| US 2016132886 | A1 | 12-05-2016 | CA | 2860179 A1 | 26-02-2015 |
| | | | US | 2016132886 A1 | 12-05-2016 |
| EP 3038046 | A1 | 29-06-2016 | EP | 3038046 A1 | 29-06-2016 |
| | | | US | 2016253672 A1 | 01-09-2016 |

EPO FORM P0459

For more details about this annex : see Official Journal of the European Patent Office, No. 12/82